# FASCICULE DE BREVET EUROPEEN

(11) **EP 0 475 863 B1**
(45) Date de publication et mention de la délivrance du brevet: **18.11.1993**
(21) Numéro de dépôt: 91420318.7
(22) Date de dépôt: 10.09.1991
(51) Int. Cl.: B65G 47/91

(54) **Dispositif de préhension de produits de formes diverses**
Greifvorrichtung für Gegenstände mit verschiedenen Formen
Gripper device for variously shaped products

(30) Priorité: 11.09.1990 FR 9011635
(43) Date de publication de la demande: 18.03.1992
(73) Titulaire: SOCIETE D'ETUDES POUR L'AUTOMATISATION DE L'INDUSTRIE DE LA CHAUSSURE SEPAIC, 75008 Paris (FR)
(72) Inventeur: Romand, Paul, F-26300 Besayes (FR)
(74) Mandataire: Guerre, Dominique

(56) Documents cités:
- EP-A- 0 348 311
- DE-A- 1 804 321
- DE-A- 3 242 167
- RESEARCH DISCLOSURE. no. 292, Août 1988, HAVANT GB page 622; NO 29276: 'MULTI-POSITION END EFFECTOR'

## Description

La présente invention concerne un dispositif de préhension de produits de formes diverses.

Il existe déjà des dispositifs de préhension de produits, notamment équipés d'organes d'aspiration.

Ces dispositifs ne sont adaptés qu'à la préhension de produits identiques entre eux dans leur forme, les organes d'aspiration venant au contact du produit en des endroits déterminés de celui-ci.

Dans certains cas, une même machine peut être amenée à avoir à traiter des produits de forme ou de dimensions différentes, en particulier dans le domaine de la fabrication de vêtements et notamment de chaussures, les formes et dimensions des pièces de tissus ou de cuir traitées variant suivant les modèles ou les différentes tailles des vêtements à réaliser.

Il existe des dispositifs de préhension comportant des organes d'aspiration à positionnement programmable en fonction des pièces, mais dont les cinématiques sont rudimentaires et construites pour un usage particulier ou des produits de forme voisine (voir p. ex. EP-A-0 348 311).

La présente invention vise à solutionner ce problème en fournissant un dispositif de préhension pouvant être adapté à la préhension de produits dont la forme ou les dimensions varient d'un produit à l'autre ou d'une série de produits à une autre et permettant un positionnement parfaitement précis des organes de préhension, ce dispositif devant, en outre, être peu onéreux à réaliser.

A cette fin, le dispositif qu'elle concerne comprend une pluralité de moyens de préhension portés chacun par un coulisseau se déplaçant dans un rail monté diamétralement sur l'extrémité libre d'une poulie, des moyens étant prévus pour la mise en mouvement indépendamment les uns des autres des coulisseaux et des poulies, ainsi que d'autres moyens pour leur commande, qui agissent sur eux également indépendamment les uns des autres, de manière à ce qu'ils permettent d'amener les moyens de préhension dans des positions relatives prédéterminées en fonction de la forme particulière du produit dont la préhension doit être assurée.

Chaque organe de préhension peut ainsi venir occuper un point quelconque d'un cercle dont le rayon est égal à la distance maximale le séparant de l'axe de rotation de la poulie. Les poulies et coulisseaux étant actionnés de manière indépendante, la position relative des organes de préhension peut être adaptée en fonction de la forme ou des dimensions du produit afin que la préhension puisse être assurée dans les meilleures conditions.

Avantageusement, l'organe de préhension est situé à l'extrémité d'un bras qui prolonge le coulisseau afin d'augmenter la surface que l'organe de préhension peut couvrir.

Dans une forme de réalisation simple de l'invention, la mise en mouvement de chaque coulisseau est assurée par un moteur d'entraînement monté sur la poulie et centré, ainsi que son pignon, sur l'axe de rotation de celle-ci, la transmission étant assurée par un câble et un jeu de poulies.

La poulie est parfaitement équilibrée grâce au centrage sur elle du moteur et son positionnement angulaire est d'une grande précision.

La mise en mouvement de la poulie est également assurée par un moteur et la transmission par un câble. Avantageusement, le câble fait un tour mort autour de la poulie, et ses extrémités traversent le corps de celle-ci et sont reliées l'une à l'autre par l'intermédiaire d'un ressort au moins partiellement étiré lorsqu'il est relié aux dites extrémités.

Le câble est ainsi toujours parfaitement tendu et la réduction du jeu pouvant exister dans la transmission est maximale.

Dans une forme de réalisation préférée du dispositif, les organes de préhension sont constitués par des ventouses au travers desquelles circule un courant d'air d'aspiration.

Le dispositif inclut également d'autres moyens tels que des galets de maintien des poulies sur lui et de guidage de leur rotation ainsi que des butées de fin de course de rotation des poulies équipées de moyens de détection de la fin de course.

De toute façon, l'invention sera bien comprise à l'aide de la description qui suit, en référence au dessin schématique annexé représentant, à titre d'exemple non limitatif, une forme de réalisation préférée du dispositif qu'elle concerne.
Figure 1 en est une vue d'ensemble de dessus, c'est-à-dire du côté opposé aux organes de préhension qu'il comporte ;
Figure 2 est une vue en coupe selon II-II de figure 1 ;

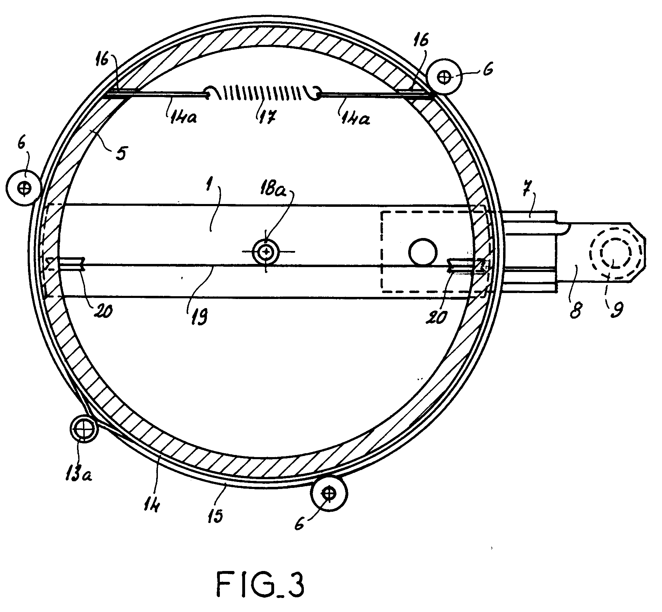

Figure 3 est une vue de dessus et à échelle agrandie de l'un de ses sous-ensembles ;

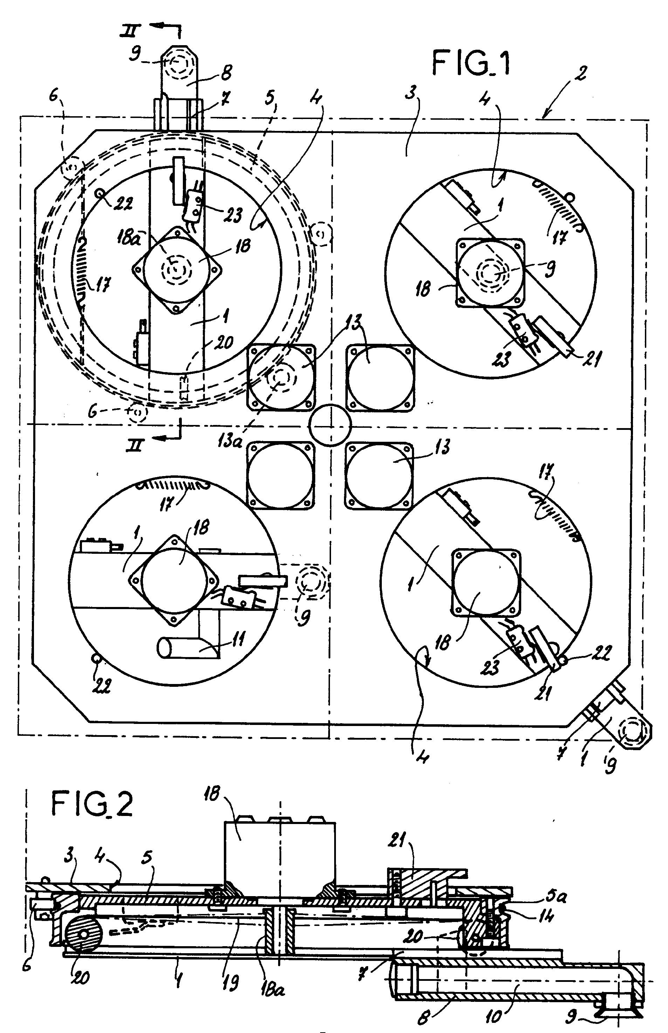

La Figure 1 représente un dispositif de préhension 2 selon l'invention plus particulièrement destiné à la préhension de pièces de cuir, dans une unité pour la fabrication de chaussures. Le dispositif 2, comprend une plaque 3 de forme générale carrée dans laquelle sont ménagées quatre lumières circulaires 4.

Comme cela apparaît en se reportant à l'ensemble des figures, une poulie 5 est montée sur la plaque 3, au droit de chaque lumière 4 et concentriquement à elle, au moyen de trois galets 6 montés libres en rotation sur la plaque 3 et dont une partie est engagée derrière un bord annulaire en saillie 5a que comprend la poulie 5.

Sur l'extrémité libre de chacune de ces dernières est monté diamétralement un rail 1 dans lequel se déplace un coulisseau 7 prolongé par un bras 8. L'extrémité du bras 8 comporte une ventouse de préhension 9 relié, par l'intermédiaire du conduit 10 percé dans le bras 8 ainsi que par les conduits 11 et 12, dont seulement certaines parties sont représentées pour la clarté de la figure 1, à des moyens pour engendrer au travers d'elle un courant d'air d'aspiration.

La mise en mouvement de chaque poulie 5 est assurée par un moteur 13 autour du pignon d'entraînement 13a duquel est enroulé un câble 14, faisant ensuite un tour mort dans la gorge 15 de la poulie 5, puis dont les extrémités 14a traversent le corps de la poulie 5, grâce à deux orifices 16 ménagés parallèlement à ses faces et permettant le coulissement à travers eux du câble 14, et sont reliées l'une à l'autre par l'intermédiaire d'un ressort hélicoïdal 17 étiré lorsque lesdites extrémités 14a sont rattachées à lui.

Grâce à cette conformation, le câble 14 est toujours maintenu parfaitement tendu, et l'entraînement en rotation de la poulie 5 est réalisé avec un jeu réduit au maximum.

La mise en mouvement de chaque coulisseau 7 est assurée par un moteur 18 monté sur la poulie 5 et centré, ainsi que son pignon d'entraînement 18a, sur l'axe de rotation de celle-ci, afin qu'elle reste parfaitement équilibrée au cours de sa rotation pour un positionnement angulaire précis. Autour du pignon 18a est enroulé un câble 19, qui forme ensuite une boucle engagée autour de deux poulies 20 alignées parallèlement au rail 1, et fixé au coulisseau 7.

Le dispositif 2 comporte également des moyens, non représentés, pour la commande des moteurs 13 et 18, agissant sur eux indépendamment les uns des autres de manière à ce qu'ils permettent d'amener les ventouses 9 dans des positions relatives prédéterminées en fonction de la forme particulière de la pièce dont la préhension doit être assurée.

De plus, chaque rail 1 comporte un doigt pivotant 21 destiné à venir en contact avec une butée 22 portée par la plaque 3 et à actionner, en position pivotée, un contacteur 23 relié à des moyens de détection de la fin de course de rotation de la poulie 5 (en bas à droite de la figure 1).

Chaque ventouse 9 peut venir occuper un point quelconque d'un cercle dont le rayon est égal à la distance maximale qui la sépare de l'axe de rotation de la poulie 5. L'actionnement et la commande, indépendamment les uns des autres, des moteurs 13 et 18, permet d'adapter la position relative des ventouses 9 en fonction de la forme ou des dimensions de la pièce afin que sa préhension soit rendue possible ou pour que celle-ci s'exerce sur la pièce aux endroits optimums.

## Revendications

1. Dispositif de préhension de produits de formes diverses, caractérisé en ce qu'il comprend une pluralité de moyens de préhension (9) portés chacun par un coulisseau (7) se déplaçant dans un rail (1) monté diamétralement sur l'extrémité libre d'une poulie (5), des moyens (13, 18) étant prévus pour la mise en mouvement indépendamment les uns des autres des coulisseaux (7) et des poulies (5), ainsi que d'autres moyens pour leur commande, qui agissent sur eux également indépendamment les uns des autres, de manière à ce qu'ils permettent d'amener les moyens de préhension (9) dans des positions relatives prédéterminées en fonction de la forme particulière du produit dont la préhension doit être assurée.

2. Dispositif selon la revendication 1, caractérisé en ce que l'organe de préhension (9) est situé à l'extrémité d'un bras (8) qui prolonge le coulisseau (7).

3. Dispositif selon les revendications 1 ou 2, caractérisé en ce que la mise en mouvement de chaque coulisseau (7) est assurée par un moteur d'entraînement (18) monté sur la poulie (5) et centré, ainsi que son pignon (18a), sur l'axe de rotation de celle-ci, la transmission étant assurée par un câble (19) et un jeu de poulies (20).

4. Dispositif selon l'une quelconque des revendications 1 à 3, caractérisé en ce que la mise en mouvement de la poulie (5) est assurée par un moteur (13) et la transmission par un câble (14).

5. Dispositif selon la revendication 4, caractérisé en ce que le câble (14) fait un tour mort autour de la poulie (5), et ses extrémités (14a) traversent le corps de celle-ci et sont reliées l'une à l'autre par l'intermédiaire d'un ressort (17) au moins partiellement étiré lorsqu'il est relié aux dites extrémités (14a).

6. Dispositif selon l'une des revendications 1 à 5, caractérisé en ce que les organes de préhension sont constitués par des ventouses (9) au travers desquelles circule un courant d'air d'aspiration.

7. Dispositif selon l'une des revendications 1 à 6, caractérisé en ce qu'il inclut des galets (6) de maintien des poulies (5) sur lui et de guidage de leur rotation.

8. Dispositif selon l'une des revendications 1 à 6, caractérisé en ce qu'il comprend des butées de fin de course de rotation des poulies (5) équipées de moyens de détection de la fin de course.

## Patentansprüche

1. Greifvorrichtung für Gegenstände mit verschiedenen Formen, dadurch gekennzeichnet, daß sie eine Mehrzahl von Greifmitteln (9) enthält, die jeweils von einem Schlitten (7) getragen werden, der sich entlang einer Führungsbahn (1) bewegt, die am freien Ende einer Scheibe (5) in Durchmesserrichtung befestigt ist, wobei Mittel (13, 18) zum voneinander unabhängigen Inbewegungsetzen der Schlitten (7) und der Scheiben (5) sowie andere Mittel für ihre Steuerung, die ebenfalls unabhängig voneinander auf sie einwirken, vorgesehen sind, derart, daß sie das Überführen der Greifmittel (9) in vorbestimmte Relativpositionen in Abhängigkeit der besonderen Form des zu greifenden Gegenstandes ermöglichen.

2. Vorrichtung nach Anspruch 1, dadurch gekennzeichnet, daß das Greiforgan (9) am Ende eines den Schlitten (7) verlängernden Arms (8) angeordnet ist.

3. Vorrichtung nach Anspruch 1 oder 2, dadurch gekennzeichnet, daß das Inbewegungsetzen jedes Schlittens (7) durch einen Antriebsmotor (8) erfolgt, der auf der Scheibe (5) befestigt ist und wie sein Ritzel (18a) auf der Rotationsachse der Scheibe zentriert ist, wobei die Transmission durch einen Riemen (19) und einen Satz von Rollen (20) sichergestellt ist.

4. Vorrichtung nach einem der Ansprüche 1 bis 3, dadurch gekennzeichnet, daß das Inbewegungsetzen der Scheibe (5) durch einen Motor (13) und die Transmission durch einen Riemen (14) erfolgt.

5. Vorrichtung nach Anspruch 4, dadurch gekennzeichnet, daß der Riemen (14) einen verlorenen Umlauf um die Scheibe (5) herum macht und seine Enden (14a) deren Körper durchqueren sowie unter Zwischenschalten einer Feder (17) miteinander verbunden sind, die, wenn sie mit den genannten Enden (14a) verbunden ist, mindestens teilweise gespannt ist.

6. Vorrichtung nach einem der Ansprüche 1 bis 5, dadurch gekennzeichnet, daß die Greiforgane von Saugern (9) gebildet werden, durch die ein Saugluftstrom zirkuliert.

7. Vorrichtung nach einem der Ansprüche 1 bis 6, dadurch gekennzeichnet, daß die Rollen (6) zum Halten der Scheiben (5) an ihr und zur Führung ihrer Rotation enthält.

8. Vorrichtung nach einem der Ansprüche 1 bis 6, dadurch gekennzeichnet, daß sie Endanschläge für den Rotationshub der Scheibe (5) enthält, die mit Mitteln zum Detektieren des Hubendes versehen sind.

## Claims

1. Device for gripping products of various shapes, characterised in that it comprises a plurality of gripping means (9) each carried by a slide (7) moving in a rail (1) mounted diametrically on the free end of a pulley (5), means (13, 18) being provided for setting in motion the slides (7) and pulleys (5) independently of each other, as well as other means for controlling them, which act on them also independently of each other, so that they enable the gripping means (9) to be brought into relative positions which are predetermined in accordance with the particular shape of the product which is to be gripped.

2. Device according to Claim 1, characterised in that the gripping member (9) is situated at the end of an arm (8) which extends the slide (7).

3. Device according to Claims 1 or 2, characterised in that the setting in motion of each slide (7) is provided by a drive motor (18) mounted on the pulley (5) and centred, along with its pinion (18a), on the axis of rotation of the said pulley, the transmission being provided by a cable (19) and a set of pulleys (20).

4. Device according to any one of Claims 1 to 3, characterised in that the setting in motion of the pulley (5) is provided by a motor (13) and the transmission by a cable (14).

5. Device according to Claim 4, characterised in that the cable (14) makes a round turn of the pulley (5), and its ends (14a) pass through the body of the latter and are connected to one another by means of a spring (17) at least partially in tension when it is connected to the said ends (14a).

6. Device according to one of Claims 1 to 5, characterised in that the gripping members are formed by suckers (9) through which a suction air current passes.

7. Device according to one of Claims 1 to 6, characterised in that it includes rollers (6) for holding the pulleys (5) on it and for guiding their rotation.

8. Device according to one of Claims 1 to 6, characterised in that it comprises end-of-travel stops for the rotation of the pulleys (5) equipped with means for detecting the end of travel.
